(19)

**Europäisches Patentamt**

**European Patent Office**

**Office européen des brevets**

(11) **EP 4 670 926 A1**

(12) **EUROPEAN PATENT APPLICATION**

(43) Date of publication:
**31.12.2025  Bulletin 2026/01**

(21) Application number: **25196886.3**

(22) Date of filing: **29.12.2023**

(51) International Patent Classification (IPC):
**B25J 9/16** (2006.01)        **B25J 11/00** (2006.01)

(52) Cooperative Patent Classification (CPC):
**B25J 9/163; B25J 11/0005**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(62) Document number(s) of the earlier application(s) in accordance with Art. 76 EPC:
**23220673.0 / 4 578 604**

(71) Applicant: **Honda Motor Co., Ltd.**
**Toyko 105-8404 (JP)**

(72) Inventors:
• **Ocker, Felix**
**63073 Offenbach/Main (DE)**
• **Puphal, Tim**
**63073 Offenbach/Main (DE)**
• **Eggert, Julian**
**63073 Offenbach/Main (DE)**

(74) Representative: **Roth, Sebastian**
**Mitscherlich PartmbB**
**Patent- und Rechtsanwälte**
**Karlstraße 7**
**80333 München (DE)**

Remarks:
This application was filed on 20.08.2025 as a divisional application to the application mentioned under INID code 62.

(54) **PROACTIVE ROBOT USING THEORY OF MIND, MULTI-AGENT SIMULATION, AND EMOTION-AWARE PLANNING**

(57) A robot system for executing at least one behavior in an interaction with at least one human agent in an environment comprising a robot configured to execute the at least one behavior, at least one sensor configured to obtain information on the environment, and a processing means configured to detect the at least one human agent based on the obtained information. The system comprises an interface for accessing a common-sense inference engine in the form of a large language model. The processing means is configured to predict a tree of behaviors of a human-robot interaction for performing the task by prompting the large language model a plurality of times and to assign cost to each behavior of the robot in the predicted tree of behaviors. The assigned costs include behavior cost for the robot and target achievement satisfaction cost of the at least one human agent in reaction to the behavior of the robot. In addition, the processing means selects a sequence of behaviors from the predicted tree of behaviors based on the assigned cost and controls at least one actuator of the robot based on the selected sequence of behaviors.

Fig. 1

EP 4 670 926 A1

**Description**

The disclosure is in the field of behavior planning and decision-making for robots, multi-agent simulation, cooperative intelligent systems, and decision-making using large language models.

Autonomous devices such as robots may cooperate with humans in addressing a wide variety of tasks in a shared environment.

For example, in a household application scenario, the satisfaction of the user with the robot and with its actions depends on an accuracy of selecting a particular action, which complies with the intentions of the user that the robot selects as a next step for supporting the human user while the robot and the user cooperate towards the common target.

Currently, most robots react to actions and in particular to commands explicitly expressed by the person they support. A next step the robot will perform is therefore highly dependent on an immediate preceding explicit command by the assisted person to the robot. In a household application scenario, the usefulness of the robot is limited by the fact that it has to be instructed explicitly to do things as opposed to a human butler, who can act proactively. In a healthcare application scenario including a robot assisting a person with a speech impediment, the autonomously acting robot regularly fails in choosing a behavior that immediately meets the intentions of the assisted person due to a lack of guidance via speech from the assisted person. Similar problems may arise in a noisy environment, e.g., a manufacturing environment, in which current robots cooperate with workers.

Patents US 10,158,593 B2 and US 10,666,594 B2 disclose a personal assistant that predicts desires based on a message history between the robot and an assisted person in the shared environment.

Current robots are still mostly reactive in their executed behavior as the robots plan their behavior based on what humans order them to do and therefore communicate to the robots what they exactly desire or intend the robot to do. Some examples of robots rely on a frequentist approach for planning their behavior, e.g., the robot predicts the future based on a statistical analysis of the past. This approach often suffers from the required large amount of training data in order to generate statistically significant results in the executed behavior of the trained robot. It is also challenging to design and train the robot so that is capable to generalize well beyond the training data used for training the robot; this regularly results in the robot exhibiting a lack of improvisation abilities in previously unknown situations.

Even more, current behavior-planning approaches for robots use large language models (LLMs) predicting a next best action of the robot. Such systems struggle with a more exhaustive analysis of the situation and decision-making taking into account the human preferences; in particular, when a plurality of human agents is involved, who have competing interests. Thus, LLM-based approaches in behavior planning require an improved planning that is able to have an intelligent human-robot interaction where the robots' decision-making extends beyond the next step in interaction between the robot and the assisted person.

The current disclosure takes account of the issues discussed before and provides a robot with an improved capability of interacting with an assisted person by executing a behavior in a shared environment for supporting the human.

The robot and the computer-implemented method according to the independent claims provide advantageous solutions to the aforementioned problem and further problems as discussed with regard to specific embodiments.

The dependent claims define advantageous embodiments.

A first aspect of the disclosure concerns the robot system for executing at least one behavior in an interaction with at least one agent in an environment. The robot system comprises a robot configured to execute the at least one behavior, at least one sensor configured to obtain information on the environment, and a processing means configured to detect the at least one agent based on the obtained information. The robot system further comprises a memory that stores information thereby providing a knowledge base including at least one profile of the at least one agent and information on capabilities of the robot. The processing means is configured to generate a plurality of options of behaviors for interaction with the at least one agent, and to initialize models for the robot and the at least one agent with the information on the capabilities of the robot and at least one profile from the knowledge base. The processing means is further configured to perform a simulation for each of the plural options for behaviors based on the initialized models, wherein, in the simulation, each of the models generates at least one of a rating for a satisfaction and a cost value for each of the plural options of behaviors. The processing means is configured to subsequently select one behavior from the plural options of behaviors based on at least one of the generated ratings and cost values, and to control the robot to execute the selected behavior.

The disclosure presents an approach for planning a behavior of a robot by simulating human-robot groups for exploring their action space and select a behavior and actions for subsequent execution that provide a high benefit and optimizes for meeting the intentions of all the assisted persons.

The robot system may include an interface for accessing a common-sense inference engine in the form of a large language model. Large language models are the preferred basis for implementing the disclosed robot system and the computer-implemented method according to the second aspect. In particular, the processing means generating a plurality of options of behaviors (behavior candidates) for interaction with the at least one agent, and the processing means performing the simulations may include prompting large language models in an embodiment. The robot creates plans for various options for proactive actions that may evolve the current scenario in the environment of the robot. The robot sets up a simulation that includes all relevant agents, humans and robots involved in the current scenario based on their respective profiles, human profiles and robot profiles that are stored and accessible to the robot. The robot simulates the planned options for a behavior and the behavior and actions that may result from performing the respective humans' reactions in a multi-agent simulation based on the obtained information on the current scenario in the environment and the planned behavior options. The robot assesses the planned behavior options based on the preferences of the involved agents based on their respective profiles, selects and then executes the best fitting of the planned behavior options that fits the preferences of the involved agents.

The robot may store and access, if necessary the stored plan variations in order to react promptly to a further evolvement of the scenario in the environment.

The disclosure presents a proactive robot that overcomes the limitations of the prior art, resulting in several unique characteristics. The robot exercises a behavior that takes into regard general common-sense knowledge. The robot creatively comes up with several potential proactive actions, based on its environment. The robot may be used initially without specific adaptation, and used "out of the box", but the robot may improve its proactive behavior also making use of user-specific preferences.

The robot shows some kind of empathy towards humans in the way that it explores several options in the action space and assesses, by means of the multi-agent-simulation, how humans would react in the current scenario in the environment. The robot takes the position of the assisted persons and regards their potential reactions to the behavior options in the simulation included in the planning process.

The robot system according to an embodiment has the processing means configured to update the at least one profile based on a feedback received from the at least one agent and the executed selected behavior.

The robot system according to an embodiment includes the at least one sensor configured to obtain the information on the environment further including information on a reaction of the at least one at least one agent to the executed selected behavior; the processing means is configured to evaluate the information on the reaction of the at least one at least one agent, and to update the at least one profile stored in the memory based on the evaluated information on the reaction.

Thus, the robot system has the capability to evaluate the reaction of the other agents to the executed selected behavior of the robot, e.g., including the feedback from the other agents. The robot system subsequently updates the profiles of the database resulting in updated models in the knowledge base for the robot and the other agents. The updated models form an updated knowledge base for the next simulation and behavior selection processes executed by the robot system and the robot.

According to an embodiment of the robot system, the at least one profile includes a human profile of at least one human agent that comprises at least one of physical parameter measurements, preferences, personality traits, personal relationships, behavioral habits of the human, capabilities of the human, and characteristic plans for behaviors associated with the at least one human.

The robot system according to an embodiment includes the simulation based on a multi-agent system, wherein a first agent of the multi-agent system corresponds to the robot, and at least one second agent is a human agent corresponding to the detected at least one agent.

According to an embodiment of the robot system, in the simulation, each of the first agent and the at least one second agent is configured to have further access to common sense knowledge of the knowledge base.

The robot system according to an embodiment comprises plural robots, wherein each of the robots comprises a communication interface, and the robots are configured to communicate with each other during a planning process for the at least one behavior of the plural robots.

The second aspect concerns a computer-implemented method for controlling a robot for executing at least one behavior in an interaction with at least one agent in an environment. The method comprises obtaining information on the environment from at least one sensor, detecting the at least one agent based on the obtained information, and accessing a memory that stores a knowledge base including profiles of the detected at least one agent and information on capabilities of the robot. The method further includes generating plural options of behaviors for interaction with the at least one agent, and initializing models for the robot and the at least one agent with the information on the capabilities of the robot and at least one profile from the knowledge base. The method proceeds with performing the simulation for each of the plural options for behaviors based on the initialized models; in the simulation, each of the models generates at least one of a rating for a satisfaction and a cost value for each of the plural options of behaviors. The method selects one behavior from the plural options of behaviors based on at least one of the generated ratings and cost values, and controls the robot to execute the selected behavior.

A third aspect of the disclosure concerns a robot system for executing at least one behavior in an interaction with at least one human agent in an environment. The robot system comprises a robot configured to execute the at least one behavior, at least one sensor configured to obtain information on the environment, and a processing means configured to detect the at least one human agent based on the obtained information. The robot system includes an interface for accessing a common-sense inference engine in the form of a large language model. The processing means of the robot system is configured to predict a tree of behaviors of a human-robot interaction for performing the task by prompting the large language model a plurality of times, and to assign cost to each behavior of the robot in the predicted tree of behaviors. The assigned cost include behavior cost of the robot (target achievement cost for the robot) and satisfaction cost of the at least one human agent in reaction to the behavior of the robot. The processing means is further configured to select a sequence of behaviors from the predicted tree of behaviors based on the assigned cost, and to control at least one actuator of the robot based on the selected sequence of behaviors.

The assigned cost may in particular include cost for target achievement by the robot and feedback of the at least one human agent in reaction to the behavior of the robot.

Behavior cost of the robot may include target achievement cost of the robot.

Satisfaction cost (corresponding to a satisfaction value) of the human agent with the robot behavior may include target achievement satisfaction cost of the human agent. The satisfaction cost correspond to a satisfaction value that may be determined based on a predicted feedback of the human agent to the behavior of the robot.

The disclosure presents a robot and a robot system that has the capability of steering human-robot interaction while being aware of effects of the executed behavior of the robot on its human partner.

The robot predicts a human-robot interaction in the form of, e.g., interaction chains, into the future including prompting the LLM many times in the planning process. The method estimates and assigns cost to the predictions, whereby the cost contains behavior cost for the robot behavior and satisfaction cost signaled via emotions from the human user. The robot has therefore the capability to plan an optimal robot behavior sequence based on total costs which incorporate emotion states of the relevant human in the environment and to select a next behavior from the planned behavior taking the emotional state of the user into account.

Behavior cost may include costs to target achievement for both or at least one of the robot and the human. The behavior cost of the robot and of the human may include plural cost components. The cost components may include cost for an accorded target achievement by the robot and the human. The cost components may include cost for individual target achievement each by the robot and by the human. The cost components may include cost for a joint target achievement by the robot and the human. The cost component may include cost for a compatibility of the target and the intention of the robot and the human.

Human cost may include plural cost components for human cost. Cost components for human cost may include cost for a general well-being of the human, cost for a comfort of the human, and target satisfaction cost of the human. In particular, for the human interaction partner, the human cost are often expressed via emotional states of the human.

The robot system according to an embodiment has the processing means configured to predict the tree of behaviors by prompting the large language model iteratively for predicting how an interaction between the human agent and the robot will evolve in the future.

According to an embodiment of the robot system, the processing means is configured to prompt the large language model in separate threads, one thread for each robot and another thread for each human agent, or to prompt several large language models including one large language model for each robot and one second large language model for each human agent.

The large language model may include separate large language models, one for each agent. The processing means of the robot system according to one embodiment is configured to provide plural prompts to the large language model for predicting one behavior of the tree of behaviors.

In an embodiment of the robot system, the processing means is configured to set a first temperature for the large language model for prompting for predicting different topic results, and to set a second temperature of the large language model for refining prediction results included in one of the predicted different topic results, wherein the second temperature is smaller than the first temperature.

Thus, the processing means is configured to first prompt the large language model with a high temperature for predicting a broad variety of dialog outcomes, and set a second temperature for the large language model for refining the variety of predicted dialog outcomes.

The processing means of the robot system according to one embodiment is configured to compute the behavior cost for the robot behavior including at least one of cost for moving an object, cost for teaching the human agent about a topic, cost for requesting an object or statement from the human agent.

According to an embodiment of the robot system, the processing means is configured to determine the behavior cost to include cost to target achievement for at least one of the robot and the human. In particular, the behavior cost may include at least one of cost for an accorded target achievement by the robot and the human, cost for individual target achievement each by the robot and by the human, cost for a joint target achievement by the robot and the human, cost for a compatibility of individual targets of the robot and the human, cost for a compatibility of individual intentions of the robot and the human.

According to an embodiment of the robot system, the processing means is configured to compute the target achievement satisfaction of the human agent with the robot behavior by inferring it from a human emotional state, wherein the human emotional state may include one of a happy state, an excited state, a sad state, and a bored state.

In the robot system according to an embodiment, the assigned cost of the robot behavior are a sum of the behavior cost and the satisfaction cost, wherein the costs for each human behavior in response to the robot behavior are weighted based on a likelihood for the human behavior occurring.

The processing means of the robot system according to one embodiment is configured to select the sequence of behaviors of the robot that has the smallest total weighted sum of cost for the behaviors of the robot of the sequence of behaviors.

In the robot system according to an embodiment, the processing means is configured to compute the total weighted sum of cost for behaviors of the robot, wherein a first weight factor of the cost for individual behaviors of the sequence of behaviors decreases with an increasing time of the individual behavior towards a prediction horizon into the future.

The robot system according to an embodiment includes the processing means configured to determine candidate sequences for the sequence of behaviors of the robot in the predicted tree of behaviors by applying a search-based planner, in particular an A* search or a Monte Carlo tree search for determining a next individual behavior of the robot. The processing means selects the sequence of behaviors from the determined candidate sequences based on the assigned cost.

According to an embodiment of the robot system, the processing means is configured to, in a behavior-execution phase based on the selected behavior sequence, execute a next individual behavior, observe a human behavior of the at least one human agent in reaction to the next executed behavior, and enter a planning phase including steps of predicting the tree of behaviors, assigning cost, and selecting a new sequence of behaviors, and control the at least one actuator of the robot based on the selected new sequence of behaviors.

The robot system according to an embodiment has the cost of an individual behavior including the behavior cost of the robot and target achievement satisfaction costs of the reaction of the at least one human agent weighted with a second weight factor, wherein the second weight factor is smaller than one.

Weighting the satisfaction cost by means of emotional reaction of the at least one human agent weighted with a second weight factor smaller than one enables nudging of the human agent towards a specific action or to feeling some specific emotional state by a respective selection of a behavior of the robot based on the respective second weight factor.

The processing means of the robot system according to one embodiment is configured to determine the satisfaction cost based on a human state estimation by classifying an emotional state based on human behavior using machine learning or a large language model.

Thus, the robot represents a proactive robot that is beneficial for various scenarios of robot-human interaction, including, but not limited to, the discussed examples.

The robot system according to one embodiment includes the processing means configured to execute the processing of one of the embodiments of the robot system according to the first aspect.

Thus, the robot system combines the aspect of emotion aware behavior planning with large language model predictions of the third aspect with using the theory of mind in multi-agent simulations according to the first aspect. Hence, the planning of behaviors of the robot and the decision making in cooperative intelligent systems provides a proactive behavior of the robot showing particular empathy towards the human agent(s) with which it is cooperating.

In a fourth aspect, a computer-implemented method for controlling a robot for executing at least one behavior in an interaction with at least one human agent in an environment, comprises obtaining information on the environment from at least one sensor, detecting the at least one human agent based on the obtained information, and accessing a common-sense inference engine in the form of a large language model. The method further includes predicting a tree of behaviors of a human-robot interaction for performing the task by prompting the large language model a plurality of times, and assigning cost to each behavior of the robot in the predicted tree of behaviors, wherein the assigned cost include behavior cost for the robot and target achievement satisfaction cost of the at least one human agent in reaction to the behavior of the robot. The method then selects a sequence of behaviors from the predicted tree of behaviors based on the assigned cost; and controls at least one actuator of the robot based on the selected sequence of behaviors.

The description of embodiments refers to the enclosed figures, in which

Fig. 1 is a block diagram illustrating elements and the links between the elements of the disclosed robot system and the computer-implemented method using multi-agent simulation according to an embodiment;

Fig. 2 is a simplified flowchart for the computer-implemented method using multi-agent simulation according to an embodiment;

Fig. 3 is a simplified flowchart illustrating a situation analysis in the context of the computer-implemented method using multi-agent simulation according to an embodiment;

Fig. 4 is a simplified flowchart illustrating the process of running simulations in the context of the computer-implemented method using multi-agent simulation according to an embodiment;

Fig. 5 is a simplified flowchart illustrating the process of assessing the satisfaction of the human agent in the context of the computer-implemented method using multi-agent simulation according to an embodiment;

Fig. 6 displays an application scenario of the computer-implemented method according to an embodiment;

Fig. 7 is a simplified flowchart illustrating the processing flow of a computer-implemented method using emotion-aware behavior planning for a robot with large language model predictions according to an embodiment;

Fig. 8 displays a tree structure of predicted behaviors generated by large language model predictions useful in a computer-implemented method using emotion-aware behavior planning for a robot according to an embodiment;

Fig. 9 displays a tree structure of predicted behaviors with assigned costs in a computer-implemented method using emotion-aware behavior planning for a robot according to an embodiment;

Fig. 10 illustrates the process of planning the emotion aware planning of a behavior using a tree structure of predicted behaviors with assigned cost in a computer-implemented method according to an embodiment;

Fig. 11 illustrates further aspects of the process of planning the emotion aware planning of a behavior using a tree structure of predicted behaviors with assigned cost in a computer-implemented method according to an embodiment;

Fig. 12 illustrates an application scenario of emotion aware planning of a behavior using a tree structure of predicted behaviors with assigned cost in the computer-implemented method according to an embodiment; and

Fig. 13 illustrates in detail processes for estimating and assigning costs to predicted behaviors in the computer-implemented method according to an embodiment.

In the figures, corresponding elements have the same reference signs. The detailed description of the figures uses same references numerals for indicating same, similar, or corresponding elements in different instances. The description of figures dispenses with a detailed discussion of same reference numerals in different figures whenever considered possible without adversely affecting comprehensibility. The figures are not necessarily to scale. Generally, operations of the disclosed processes may be performed in an arbitrary order unless otherwise provided in the claims.

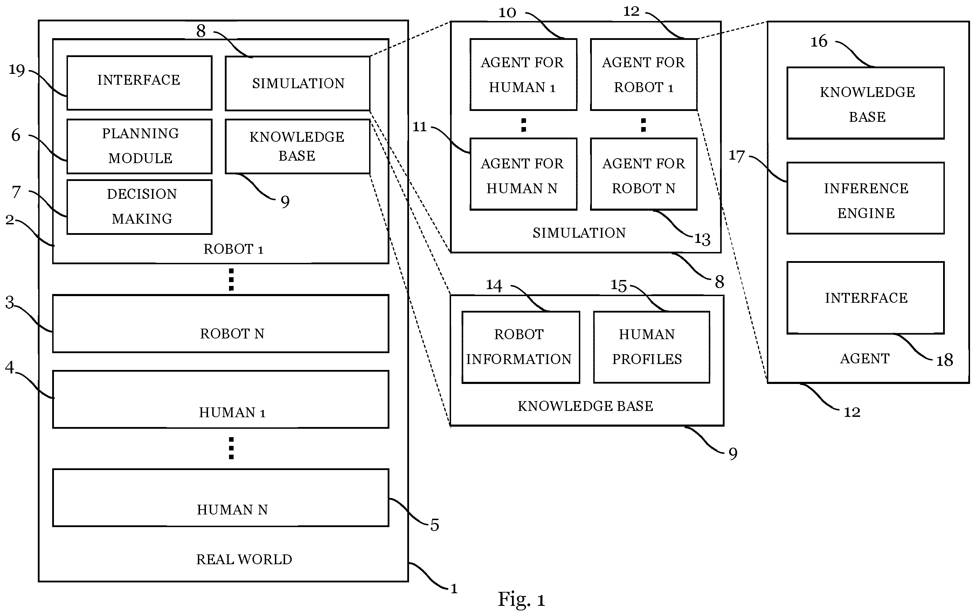

Fig. 1 is a block diagram illustrating elements and the links between the elements of the disclosed robot system and the computer-implemented method using multi-agent simulation according to an embodiment.

The disclosure concerns at least one robot 2, 3 cooperating with at least one human 4, 5 in a common environment (shared environment). The illustration of fig. 1 shows a plurality of robots 2, 3 that operate in the environment of the real world 1. A number of N humans 4, 5 is also present in the environment.

A robot system controls operation of a robot 2. The robot system includes the first robot 2. All structural elements of the robot system 1 may be integrated with the first robot 2. Alternatively, at least some elements of the robot system may be arranged externally to the first robot 2, e.g., a sensor or a plurality of sensors, a processor or a plurality of processors constituting the processing means, and a memory or a plurality of memories of the robot system may be arranged externally to the first robot 2.

The functional elements of the robot 2 include an interface 19, a planning module 6, and a decision-making module 7.

The robot 2 includes an interface 19. The interface 19 enables the robot 2 to interact with other structural elements in the environment of the robot 2.

The robot 2 has a range of modules for perceiving its environment and obtaining information on the environment and for acting in order to influence a state of the environment.

For perceiving its environment, the interface 19 of the robot 2 may comprise a perception module that is configured to detect, localize and identify other agents, e.g., humans 4, 5 and other robots 3, and objects in the environment of the robot 2. The perception module matches identified agents and objects in the environment to agents and objects with stored information thereon in the memory. The perception module identifies a current state in terms of properties of the identified agents and objects based on acquired information on the environment. The perception module identifies actions that the identified agents, e.g., humans 4, 5 and other robots 3 in the environment execute. The perception module recognizes desires or intentions of the humans 4, 5, either expressed explicitly via speech by the humans 4, 5, or implicitly in the actions executed by the humans 4, 5. The perception module may generate, in particular, a textual description of the aforementioned items perceived in the environment of the robot 2.

For acting in the environment, the interface 19 includes a set of actuators that allows the robot 2 to execute actions in the environment that may, e.g., change a state of the environment or enable an interaction with other agents in the environment. By executing the actions, the robot 2 implements a behavior, and performs typical tasks in everyday life, such as picking up objects, putting the objects back down, modifying objects, turning knobs and opening doors, or moving around the environment.

The planning module 6 plans a behavior of the robot 2. The decision-making module 7 enables the robot 2 to take decisions, e.g. to select a planned behavior from a plurality of planned behavior options for execution by the robot 2. The planning module 6 plans the behavior of the robot 2 by performing a simulation 9, in particular a multi-agent simulation, based on information on the current situation in the environment, and predicts potential further evolvement alternatives how a perceived scenario in the environment may further evolve in the future.

In particular, the planning module 6, obtains a textual description of the situation as currently perceived in the environment as an input from a perception module of the robot 2 and retrieves human profiles of humans 4, 5 detected in the environment from a memory. Based on the acquired human profiles, the planning module creatively generates several possible target states that are suited to align well with preferences of the humans 4, 5 included in the human profiles. For each target state, the planning module 7 then generates detailed plans including behaviors of the robot 2. The planning module 7 stores the generated plans in memory.

The planning module 7 may generate the detailed plan by applying known planning algorithms using large language models. For example, the planning module may apply a "tree of thought"-algorithm (TOT), which essentially spans a tree of potential scenarios. Alternative approaches applied by the planning module 7 for generating the detailed plans including the behaviors of the robot 2 may base on "graph-of-thought"-algorithm or the "X-of-thoughts"-framework (XoT).

The decision-making module 7 consolidates a feedback of all human agents 10, 11 for all simulation runs and selects a plan from the generated plans leading to the highest overall satisfaction based on the received feedbacks. In one embodiment, a uniform distribution of weights for the satisfaction of all human agents 10, 11 may be assumed for determining the overall satisfaction. Alternatively, the determined overall satisfaction may be adapted, by emphasizing the need for assistance for physically or mentally impaired humans 4, 5 or children as humans 4, 5.

The robot system may store a ranked list of the generated plans associated with their respective overall satisfaction rating in memory, in order to facilitate a re-planning in case there were unforeseen developments in the real world 1 when the robot 2 represented by the robot agent 12 enacts the selected planned behaviors.

The simulation 8 uses not only current information on the environment of the robot 2, but also uses information from a knowledge base 9.

The knowledge base 9 stores information about the robot 2 and the humans 4, 5, as well as other robots 3, including, but not limited to a robot profile of the robot 2, and human profiles of the humans 4, 5.

The robot profile may include information on capabilities of the robot 2, e.g., including information on actions that the robot 2 is capable to perform, including restrictions such as maximum loads that the robot 2 can lift, for example.

The human profiles may include, but are not limited to, physical measurements of the humans 4, 5 comprising, e.g., size, weight, age, and gender of each human 4, 5.

The human profiles may include information on individual preferences of the humans 4, 5, the preferences concerning objects, locations, states, or processes.

The human profiles may include information on habits of the humans 4, 5. Information on habits of a human 4, 5 may include a list or a summary of previous actions performed by the human 4, 5.

The human profiles may include information on abilities and disabilities of the human 4, 5: The information on abilities and disabilities may include a maximum load that the human 4, 5 can carry, a reaching range with arms of the human 4, 5, or cognitive limitations of the human, e.g. concerning eyesight or hearing.

The human profiles may include information on relationships of the human 4, 5, including but not limited to, friendships, information on people the human 4, 5 dislikes, or mentor-mentee relationships.

The human profiles may include information on a personality type, e.g., a personality type indicator such as the Myers Briggs personality type indicator, and the resulting characteristics of the human 4, 5.

The information on relationships of the human 4, 5, their habits and relationships may be learned continuously during operation of the robot 2 from observations obtained via the perception module.

The knowledge base 9 stores information, which includes common-sense knowledge. The robot 2 may store information on common sense knowledge either locally, or access information on common sense knowledge via an application programming interface (API) that is stored externally, e.g., on a server, or access information implicitly encoded into a machine learning model such as a neural network, e.g., a large language model.

The information on common sense knowledge may include information on a typical behavior of humans in specific situations. The information on common sense knowledge may include exemplary plans for detailing how to achieve a specific intent or target.

The functional elements interface 19, planning module 6, decision-making module 7, simulation 8 and knowledge base 9 may be implemented in software running on respective hardware configured for processing and storing of data. At least some of the structural elements including at least one processor and memory may be arranged externally to the robot 2 in a distributed processing architecture.

The robot system performs the simulation 8 of the scenario in the real world 1, in particular in the environment of the robot 2, based on information obtained from at least one sensor on the environment.

The simulation 8 comprises of a multi agent system (MAS) including one agent 10, 11 for each human in the environment, one agent 12 representing the robot 2 (first robot 2), and one agent 13 for every further robot 3 in the environment.

The agents 10, 11, 12, and 13 of the simulation 8 are aware of the other agents 10, 11, 12, and 13 in the simulation 8 and can converse with each other. In the simulation environment, the agent 12 representing the robot 2 enacts plans and executes behaviors generated by the planning module 6 and the agents 10, 11 representing the humans 4, 5 may act and react accordingly. After executing each plan, the humans' agents 10 11 rate their satisfaction, which will be discussed below, with the executed process based on the plan and a target state. Both the executed plan and the satisfaction ratings issued by the humans 4, 5 are stored in memory.

Each agent 12, 13 of the robot 3, 4 comprises a knowledge base 16, an inference engine 17, and an interface 18. Each agent 10, 11 representing a human 3, 4 has essentially a corresponding structure to the agents 12, 13 representing robots 2, 3 and comprises a knowledge base 16, an inference engine 17, and an interface 18.

Every agent 10, 11, 12, 13 in the simulation 8 has beliefs about itself and its environment and desires. In addition, the agent 12 representing the robot 2 also has intentions, in particular the plan generated by the planning module 6. These beliefs, desires and intentions (BDI) are stored in each agent's individual knowledge base 13. All agents 10, 11, 12, 13 have an interface 18, in particular a natural language (NL) interface, with messaging functions, allowing the agents 10, 11, 12, 13 to communicate in natural language, and access to functions that allow them to make changes to their environment in the simulation 8. Every agent 10, 11, 12, 13 has an inference engine 17, enabling the agent 10, 11, 12, 13 to decide what to do next and to reflect on what the agent 10, 11, 12, 13 perceived in the environment. Each agent 10 11 representing a human 4, 5 can reflect on whether it liked what happened, and what evolvement of the perceived scenario would have increased its satisfaction.

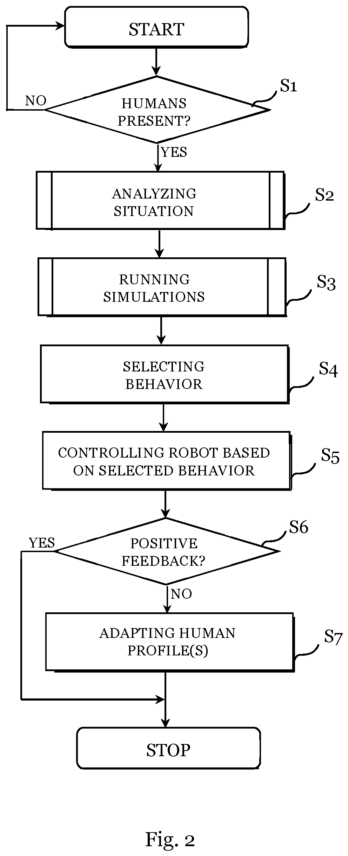

Fig. 2 is a simplified flowchart for the computer-implemented method using multi-agent simulation according to an embodiment.

An overview of the workflow along which the robot system plans and operates the robot 2 is discussed based on figures 2 to 5.

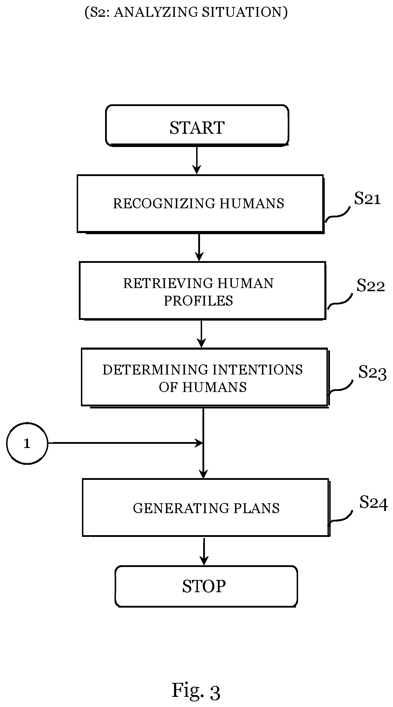

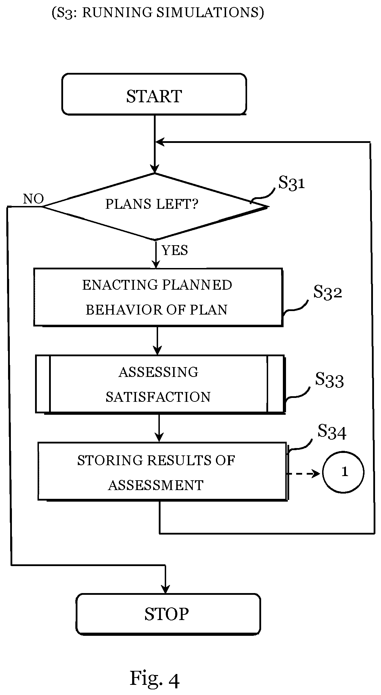

First, the current situation in the environment is analyzed, and potential plans including options for behaviors of the robot 2 are generated by the planning module 6. Then, the simulation 8 is set up and the generated plans are simulated. For each simulation run of the simulation 8, the human agents 10, 11 representing the humans 4, 5 assess their satisfaction in the form of satisfaction ratings. If during simulation, individual human agents 10, 11 come up with suggestions for how to increase their satisfaction, the planning module 6 may generate additional plans as indicated by the dashed line marked with the circled "1" in figs. 3 and 4. Finally, the robot system selects the plan for the robot 2 that results in the highest overall satisfaction and controls the robot 2 to implement the selected plan. If the humans 4, 5 provide feedback in real world to the executed plan, the robot system considers the obtained feedback by respectively adapting the human profiles 15 stored in the knowledge base 9.

In fig. 2, the processing flow starts with a step S1, in which the robot system determines whether any humans 4, 5 are present in the environment of the robot 2, based on the information on the environment. If the robot system determines that no humans 4, 5 are present, the processing terminates and checks again at a later point in time. In case that the robot system determines humans 4, 5 to be present in the environment, the processing proceeds to step S2.

In step S2, the robot system analyzes the situation in the environment as perceived by the robot system based on the information obtained from the environment.

The step of analyzing the situation of the environment includes a sequence of sub-steps that are depicted in fig. 3 in more detail.

Fig. 3 is a simplified flowchart illustrating a situation analysis of step S2 in fig. 2 in the context of the computer-implemented method using multi-agent simulation according to an embodiment.

Analyzing the situation in the environment starts with step S21. In step S21, the robot system recognizes the humans 4, 5 based on the information on the environment acquired by the robot system 1. In particular, the robot system identifies the humans 4, 5 in order to being able to obtain corresponding human profiles 15 of the humans 4, 5 present in the environment.

In step S22, the robot system accesses the knowledge base 9 (robot knowledge base 9) and retrieves the human profiles 15 corresponding to the recognized humans 4, 5. The robot system accesses the knowledge base 16 of the human agents 10, 11 and retrieves the human profiles 15 corresponding to the recognized humans 4, 5. The robot system has access to all profiles, including the robot profile and the human profiles 15, which enables the robot system to create the agents 10, 11 in a simulation. Within the simulation, a behavior of the agents 10, 11 will be simulated based on their own human profile or robot profile. Additionally, in the simulation, a behavior of the agents 10, 11 will be simulated based on their own human profile 15 or robot profile and a limited version of the profiles, e.g., including human profile 15 and robot profile, of the other agents 10, 11.

In step S23, the robot system determines predicted intentions of the humans 4, 5 based on the retrieved human profiles 15 and the information on the environment.

The robot system then proceeds to step S24, in which the robot system generates plans by predicting sequences of behaviors based on the determined behaviors of the robot 2, the humans 4, 5, and possibly also further robots 3 present in the environment. Step S24 may include determining a tree-like structure of behaviors for execution by the robot 2 and the other agents including the humans 4, 5 based on the determined intentions of the humans 4, 5, the human profiles 15, and the information on the environment.

The generated plans from step S24 are then provided to a step S3 of simulating the generated plans of fig. 2.

Returning to the flowchart of fig. 2, after analyzing the situation in the environment, the robot system proceeds with running the simulations 8 as multi-agent simulations in step S3. The step of running the simulations 8 includes a sequence of sub-steps that fig. 4 shows in more detail.

Fig. 4 is a simplified flowchart illustrating the process of running simulations in the context of the computer-implemented method using multi-agent simulation according to an embodiment.

Running the simulations 8 as multi-agent simulations according to the processing of step S3 includes a cyclic processing that starts with determining in step S31 whether there are any generated plans from step S24 that are not yet simulated. If there are no un-simulated plans, the processing of fig 4 is terminated and the processing of steps S32 to S34 is skipped.

If step S31 determines that there are generated plans from step S24 that are not yet simulated, the process of fig. 4 selects the yet not simulated plan, and starts with simulating the generated plan in a multi-agent simulation in step S31. After simulating the enacted planned behaviors of the plan, the processing proceeds to step S33, in which the robot system continues with assessing the satisfaction of the humans 4, 5 with the enacted plan in the simulation.

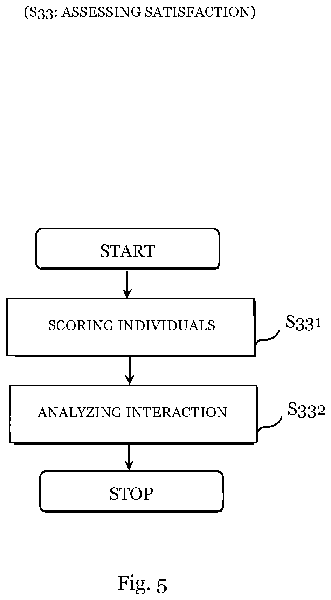

Fig. 5 is a simplified flowchart illustrating the process of assessing a satisfaction according to step S33 in the context of the computer-implemented method using multi-agent simulation according to the embodiment.

The process of assessing the satisfaction of the humans 4, 5 with the simulated plans in step S33 of the flowchart of fig. 4 comprises two steps.

In the first sub-step S331, the agents 10, 11 representing the humans 4, 5 in the simulation rate their satisfaction with the final situations of the simulations based on their human profiles 15.

The second sub-step S332 of the process of assessing the satisfaction of the humans analyzes the interactions between the robot 2 and the human agents 10, 11 to identify potentially better plans that should also be simulated.

Returning to step 33, having assessed the satisfaction of the humans 4, 5 with the simulated plan, the processing of fig. 4 proceeds to step S34 and stores the results of the assessment of the satisfaction of the humans 4, 5 with the simulated plans in the knowledge base 9.

After step S34, the robot system returns to step S31 of determining whether there are any un-simulated plans left. In case there are no plans left that have not yet been simulated, the robot system terminates the process of running the simulations 8 according to step S3.

Returning to the flowchart of fig. 2, after running the simulations 8, the robot system proceeds with selecting a behavior from the behavior options based on the simulations and the scorings of their results in step S4.

In step S5, the robot system controls the robot 2 based on the selected behavior.

In step S6 following to step S5, the robot system determines whether the humans 4, 5 communicated a feedback to the executed behavior of the robot 2. Communication of feedback may be either directly and explicitly, e.g. by speech, or implicitly, e.g., by a respective action of the human(s) 4, 5 in response to the executed behavior (action) by the robot 2. If the robot system determines a negative feedback (no positive feedback) on the executed behavior from the human(s) 4, 5, the robot system executes step S7, in which the robot system updates the human profile (s) 15 based on the received feedback from the human 4, 5 and stores the updated human profile 15 in the knowledge base 9.

If the robot system determines a positive feedback on the executed behavior from the human(s) 4, 5, the robot system skips step S7, in which the robot system updates the human profile (s) 15. Alternatively, the robot system may update the human profile(s) 15 based on the received feedback from the human 4, 5 and stores the updated human profile(s) 15 in the knowledge base 9.

Alternatively, if the robot system determines that the humans 4, 5 either explicitly or implicitly communicated a feedback in response to the executed behavior of the robot 2 in step S5, the method skips step S7 and terminates the processing shown in the flowchart of fig. 2 directly.

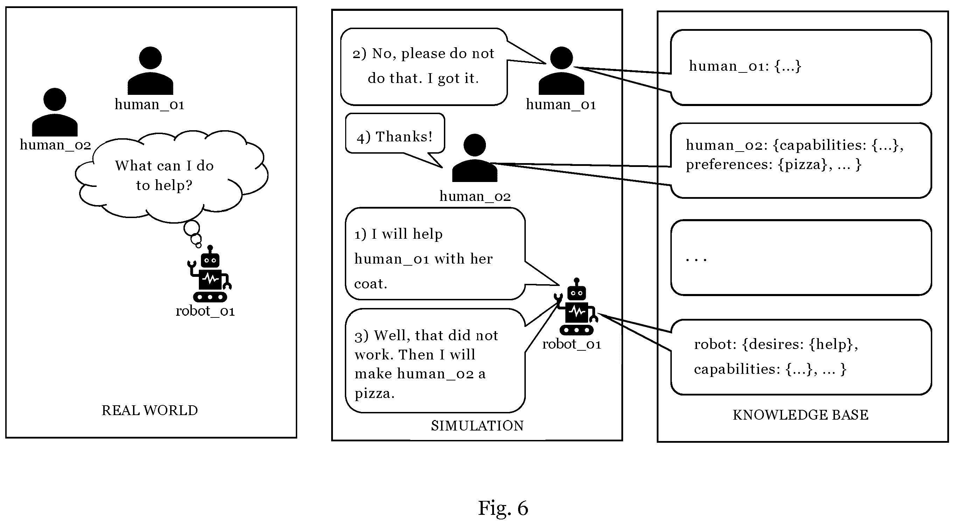

Fig. 6 displays an application scenario of the computer-implemented method according to an embodiment.

The application scenario includes in the environment in the real world a first human_01, a second human_02 as human agents and the robot_01 that is controlled by the robot system based on the computer-implemented method in the processes of figs. 2, 3, 4, and 5.

The robot_01 is a supportive robot that follows the task of supporting the humans in its environment, in the scenario of the left part of fig. 6 illustrating the real world, the human_01 and human 02.

The robot_01 may include sensors and actuators, e.g., the robot_01 may be a humanoid robot such as Asimo from Honda. The robot_01 may execute actions via an API.

The perception module of the interface 19 may, e.g., be realized via visual question answering for images of the environment or other computer vision technologies.

The planning module 6 may be backed by a large language model (LLM) operating, e.g., based on a tree of thought (TOT) algorithm, or a more conventional robotic planner using, e.g., planning domain definition language (PDDL).

The simulation 8 is a multi-agent simulation running in Python. The simulation includes a class for the runner, which schedules when to run which agent, and an agent class with messaging functionality. The simulated agent is a wrapper around a LLM, e.g., via the OpenAI API. Prompting of the LLM is used for generating the plans and for assessing the satisfaction of the human agents with a given evolvement of the scenario.

The creative planning is implemented via TOT, with a temperature parameter larger than zero.

For the decision-making and selecting a plan for controlling the robot_01, a function to optimize over individual agents' satisfaction rating for possible scenarios may be used.

The analysis of the perceived situation in the environment by the robot system generates two behaviors for the robot_02. A first behavior option is to help the human_01 with her coat. A second behavior option is to prepare a pizza for the human_02.

The simulation 8 of the generated behavior options and the assessed satisfaction of the user_01 and the user_02 in reaction to the simulated first and second behavior options based on the specific human profiles 10, 11 of the human_01 and the human_02 reveals only a low predicted satisfaction of the first human_01 with regard to the first behavior option. The predicted satisfaction of the second human_02 with regard to the second behavior option is more content and therefore higher. Consequentially, the robot system selects the second behavior option for execution by the robot_01 and controls the robot_01 to perform the selected second behavior.

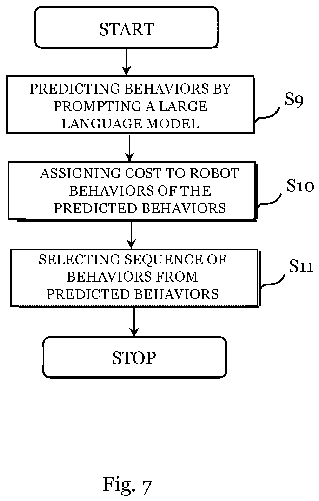

Fig. 7 is a simplified flowchart illustrating the processing flow of a computer-implemented method using emotion-aware behavior planning for a robot with large language model predictions according to an embodiment.

The computer-implemented method enables controlling a robot for executing at least one behavior in an interaction with at least one human agent in an environment. The computer-implemented method is an example for a method for emotion-aware behavior planning for a robot using large language model predictions. The discussion of the method steps of fig. 7 and the subsequent figures refers to an embodiment that includes target achievement cost of the robot 2 as a specific example of behavior cost for a behavior of the robot 2, and target achievement satisfaction cost of the human agent as a specific example for the satisfaction cost of the human that are associated with the behavior of the robot 2.

The method includes steps of obtaining information on the environment from at least one sensor, and of detecting the at least one human agent based on the obtained information.

In step S9, the method accesses a memory configured to store a large language model, and predicts a tree of behaviors of a human-robot interaction for performing the task by prompting the large language model a plurality of times.

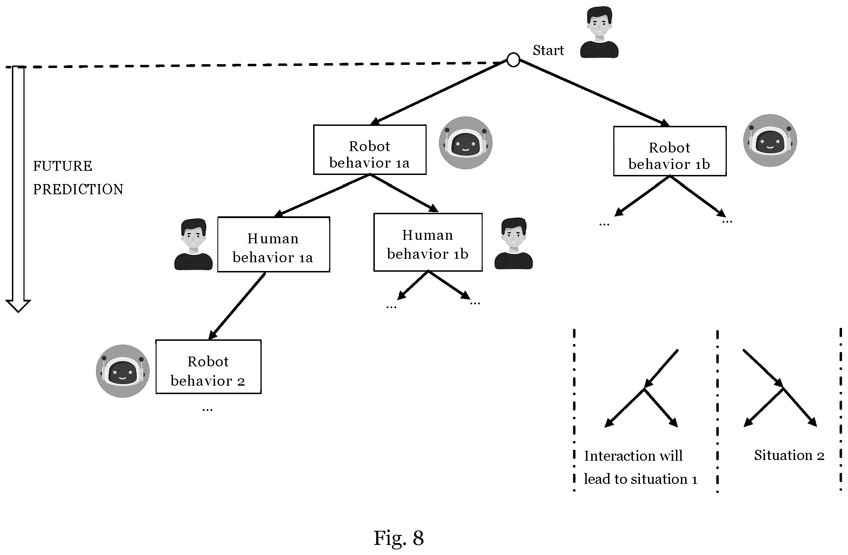

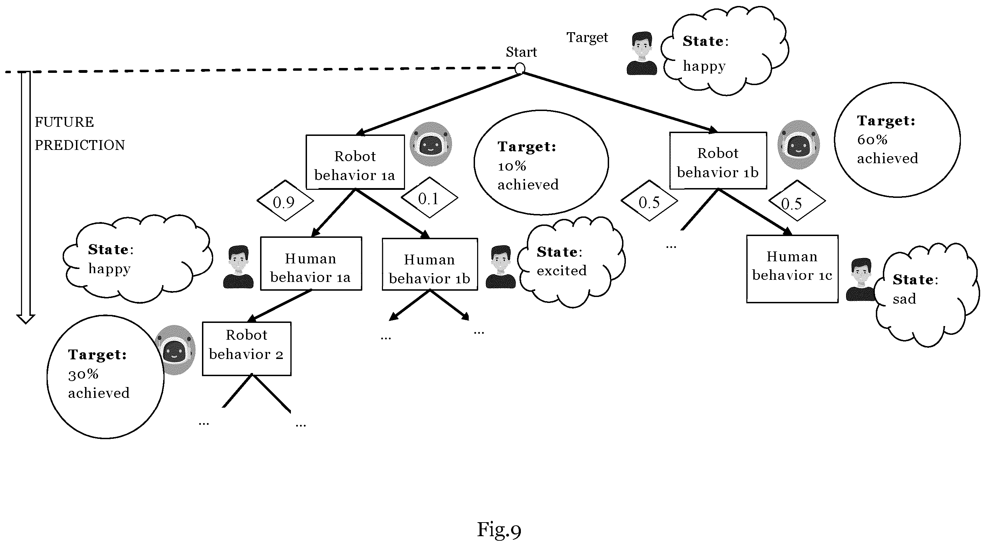

The tree of behaviors represents an interaction between the robot and the at least one human agent, which may represent a conversation between the robot and the human agent, or a physical interaction of the robot and the at least one human agent, or a combination of both. For sake of simplicity, the following description of figs. 8 and 9 assumes an interaction of the robot and one human agent. Nevertheless, along the discussed principle, an interaction involving the robot and plural agents, e.g., the plural agents including plural other robot agents and plural human agents is also possible.

The tree of behaviors extends from a current point in time into the future up to a prediction horizon.

Step S9 builds a tree-like data structure including predicted robot behaviors of the robot and human behaviors of the at least one human agent in the environment of the robot. Fig. 9 illustrates a particular example for the tree of behaviors. A predicted robot behavior triggers at least one human behavior in response. A human behavior triggers at least one robot behavior in response.

In order to predict the robot behaviors and the human behaviors representing the interaction of the robot and the human agent, the method in step S9 prompts the large language model iteratively. By iteratively prompting the large language model, the method predicts how the interaction between the robot and the human agent may evolve until reaching the prediction horizon. Step S9 includes a plurality of prediction steps; each of the prediction steps provides either a prediction of at least one robot behavior from the start of the prediction, or at least one human behavior in response to a predicted robot behavior, or at least one robot behavior in response to a human behavior.

The prediction of step S9 corresponds to a behavior prediction for a future time. For prediction horizons extending over a long time, the predicted interaction may result in different situation outcomes as alternative evolvements of the current situation in the environment.

The prediction of step S9 may use a plurality of large language models, e.g., including but not limited to one large language model for each agent involved in the current scenario. Thus, the prediction step S9 may prompt a first large language model for the robot for predicting the robot behavior and a second large language model for the human agent for predicting the behavior of the human agent. Alternatively, the prediction of step S9 may use one, or at least less large language models than there are agents in the prediction, by keeping track of at least two different conversation threads using a same large language model.

The prediction of step S9 may prime the large language model to take over the role of robot or of the human agent in order to improve the prediction. Priming of the large language model enhances context and conversation by setting an initial context or providing prior instructions to the large language model in order to influence its output. Setting a preliminary stage, the large language model gets a direction, which guides its response including the predicted behaviors and the overall interaction. Priming may in particular include feeding a set of instructions or a context statement to the large language model before the large language model starts generating responses to a prompt, thereby tailoring the responses to the prompt or prime to a specific direction.

The prediction of step S9 may include plural prompts in one single prediction step, e.g., "statement 1a", "statement 1b", ..., "statement 1n", which may also have the effect of improving the prediction results, e.g. the predicted behaviors.

The prediction of step S9 using large language models may set a temperature parameter of the large language model to a first temperature value in order to have high randomness that may result in predicting different topic outcomes generated by the large language model.

The first temperature value is a high temperature value.

The prediction of step S9 using large language models may set a temperature parameter of the large language model to a second temperature value in order to refine the predicted behaviors within the different topic outcomes generated by the large language model with the first temperature value before.

The second temperature value is a low temperature value. In particular, the second temperature value is smaller than the first temperature value.

Step S9 provides the tree of behaviors as illustrated in a specific example in fig. 9, which forms the basis for assigning cost to the predicted behaviors included in the tree of behaviors.

In step S10 the method assigns cost to each behavior of the robot in the predicted tree of behaviors, wherein the assigned cost include behavior cost (target achievement cost) for the robot and satisfaction cost (target achievement satisfaction cost of the at least one human agent in reaction to the behavior of the robot 2.

In particular, the cost for a behavior i of the robot include the target achievement cost for the robot to achieve the target with the behavior i. For example, in step S10, the method may include estimating the target achievement cost for achieving the target by the robot 2.

The cost for a behavior i includes according to equation (1):

$$\text{(cost for robot behavior i)} = \text{(target achievement cost of robot behavior i)} +$$

$$+ \text{(probability of human behavior j)} \times \text{(human target achievement satisfaction feedback behavior j)} +$$

$$+ \text{(probability of human behavior k} \times \text{(human target achievement satisfaction feedback behavior k);}$$

$$(1)$$

with the human behavior j and the human behavior k representing alternative human behaviors in reaction to the robot behavior i.

The target achievement cost of the robot behavior i may be a value corresponding to an extent the target is actually achieved by the robot behavior i, e.g. by moving an object in the environment, by teaching the human agent on a specific topic, or by stating to the human agent which object or what information is required.

The human emotional state included in the human behavior j, k in response or as reaction to the robot behavior i may include, for example, a happy emotional state, an excited emotional state, a confused emotional state, a sad emotional state, a bored emotional state in order to name some examples.

The probability occurrence of a human behavior j. k may have a value between 0 and 1 corresponding to the respective likelihood that human behavior j or a human behavior k is predicted to occur in reaction to the executed robot behavior i.

The cost of each individual robot behavior i (elementary behavior i) included in a sequence of behaviors (path of behaviors, chain of behaviors) along the entire sequence of behaviors are summed in order to compute the total cost of the sequence of behaviors in equation (2):

$$\text{total cost} = \sum_n \alpha(i) * (\text{cost for robot behavior } i); \qquad (2)$$

In equation (2), the cost of the individual robot behavior i are each weighted with a respective weight $\alpha(i)$. The weight $\alpha(i)$ for the robot behavior i decreases towards zero with the time for which the robot behavior i is predicted to occur is increasing from the current time towards the prediction time horizon. The weight $\alpha(i)$ enables to take into regard that the probability of the predicted robot behavior i to happen decreases as many other events may occur in the meantime, which may result in the predicted robot behavior i not occurring.

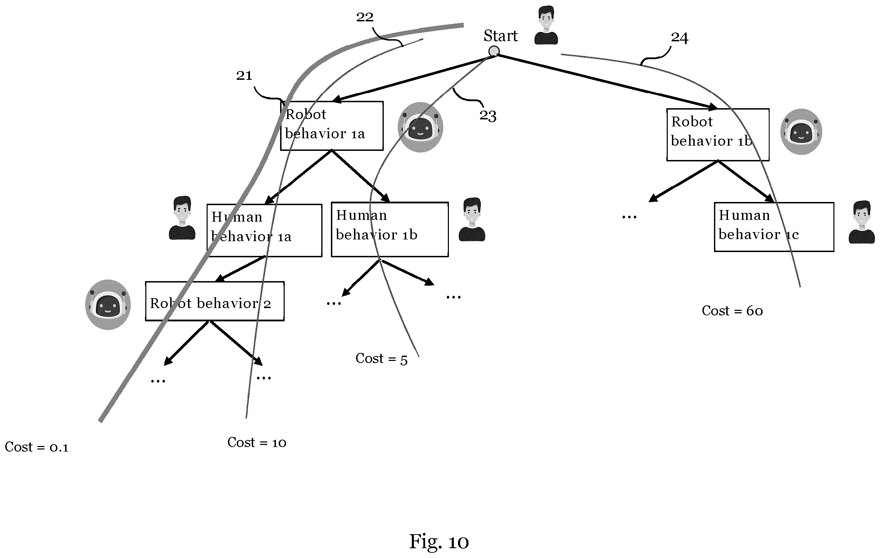

After executing the process of step S10, the tree of behaviors from step S9 is annotated with respective target achievement cost for each of the robot behaviors and human behaviors with human states as illustrated in fig. 10. Each behavior sequence of including robot behaviors and human behaviors included in the tree of behaviors represent a potential further evolvement of the current scenario in the environment, wherein the potential evolvement starts at a current time and extends towards the prediction time horizon. Each potential evolvement includes a sequence of behaviors including robot behaviors and human behaviors extending along the edges of the graph illustrated in figs. 9, 10, and 11 at different instances while executing the planning process for the behavior of the robot 2. Each sequence of behaviors has a total cost value assigned whose computation follows equation (2).

After assigning cost to each behavior of the robot 2 in the predicted tree of behaviors, wherein the assigned costs include target achievement cost for the robot and target achievement satisfaction cost of the at least one human agent in reaction to the behavior of the robot 2, in step S10, the process proceeds to step S11.

In step S11, the method selects a sequence of behaviors from the predicted tree of behaviors based on the assigned cost. The selected sequence of behaviors implements an emotion-aware behavior of the robot 2 as result of the behavior planning process of steps S9, S10 and S11. The detailed step of selecting the sequence of behaviors from all the sequences included in the tree of behaviors is illustrated in fig. 10.

In the discrete planning process of step S11, the method selects the sequence of behaviors from all the sequences of behaviors in the tree of behaviors, which has the lowest total cost over all the behaviors included in the sequence of behaviors.

For implementing step S11, the method may use a search-based planner to find the best next behavior of the robot 2 faster. Examples for search-based planners are A* search, Dijkstra, or a Monte Carlo Tree Search (MCTS).

Using such algorithm, the search-based planner prioritizes certain branches in the tree of behaviors, focusing on the exploration in those branches of the tree of behaviors that are especially promising to result in an optimal solution, and ignoring other branches.

After executing a planning phase, and having planned a behavior of the robot 2 by selecting a sequence of behaviors in step S11, the method enters an execution phase. In the execution phase, the robot 2 takes the next robot behavior of the selected sequence of behaviors and executes the next robot behavior.

After having selected the sequence of behaviors in step S11, the method proceeds with controlling at least one actuator of the robot 2 based on the selected sequence of behaviors.

While observing a human behavior in reaction, or after having observed the human behavior in reaction to the executed robot behavior, the method starts with a new prediction-planning cycle by entering the planning phase including steps S9, S10, and S11 again in order to plan a next behavior of the robot 2 by selecting a new sequence of behaviors based on new computed total cost.

Fig. 8 displays a tree structure of predicted behaviors generated by large language model predictions useful in a computer-implemented method using emotion-aware behavior planning for a robot 2 according to an embodiment.

The exemplary tree of behaviors includes robot behaviors and human behaviors.

A robot behavior may include a set of sentences that form a statement. The statement may be presented in a visual format of a written text or in an audible format as speech (sound).

The robot behavior may include a set of facial expressions of a humanoid robot 2. The set of facial expressions may be displayed using a virtual model of the robot face or a real-world robot face of the humanoid robot. The facial expressions may include, e.g., looking angry and frowning with raised eyebrows, opening mouth and eyes by surprise.

The robot behavior may include a set of actions of the robot 2, e.g. including the robot 2 moving mechanical arms and then moving fingers arranged at the end of the arm. The set of actions may include the robot 2 holding an object in hand and then transporting the object to another location.

The robot behavior may include in case of a robot 2 with moving means such as wheels or legs showing behavior with motion of the robot 2 in or around the environment. Showing behavior with motion may include the robot walking two steps on his legs, then starting to accelerate and turning around, for example.

Although fig. 8, as well as figures 9 and 10 show the sequence of behaviors in the form of a chain of robot behaviors and human behaviors, the sequence of behaviors may be different than visualized insofar, as the alternating arrangement of a robot behavior and a human behavior of figs. 8, 9, 10 is only an example.

In particular, the tree of behaviors may include a human behavior and a robot behavior occurring at the same time.

The predicted behaviors are arranged in tree-like structure starting at a current point in time. The robot system may predict behaviors of the robot 2 (robot behavior) and behaviors of the humans 4, 5 using a large language model (LLM). In the exemplary structure of fig. 8, the LLM predicts a (first) robot behavior 1a for execution by the robot 2. Alternatively, the LLM predicts that the robot 2 may execute a (second) behavior 1b as an alternative to the predicted first behavior 1a. The LLM further predicts a first human behavior 1a of the human 4 in reaction to the robot 2 executing the behavior 1a before. The LLM predicts as an alternative to human behavior 1a that the human 4 may execute a behavior 1b in case the robot 2 performs the robot behavior 1a. In fig. 8, the LLM further predicts the robot 2 to execute the robot behavior 2 in case of the human 2 executing the behavior 1a in reaction to the robot executing the robot behavior 1a starting from the current point in time in the perceived scenario in the environment. In this manner, the tree of behaviors generated in the planning process provides a basis for determining a plurality of robot behavior options for the robot 2. Each of the predicted different robot behavior options for the robot 2 will, when executed by the robot 2 be part of a different interaction of the robot 2 with the other agents, e.g. including human agents 4, 5 and other robot agents 3, or objects in the environment. Each of the different interactions of the robot 2 with its environment changes the current situation in the environment.

The tree of behaviors as shown in fig. 8 shows a human behavior followed by robot behavior when moving along an edge of the tree, each edge indicating a prediction for an interaction comprising a behavior of one first entity, e.g., the human agent 4, 5, and a behavior of a second entity, e.g. the robot 2, in reaction to the preceding behavior of the first entity.

Alternatively or additionally, the tree of behaviors may comprise a plurality of human behaviors of the humans 4, 5 in between two robot behaviors of the robot 2 and vice versa.

Alternatively or additionally, concerning group interactions with the robot 2 interacting with many other robots 3 (robot agents) or human agents 4, 5, the robot 2 may have a longer pause while doing nothing.

Fig. 9 displays a tree structure of predicted behaviors (tree of behaviors) with assigned cost in a computer-implemented method using emotion-aware behavior planning for a robot 2 according to an embodiment.

In fig. 9, the tree of behaviors of fig. 8 is further annotated with state information including information on a human emotional state of the human 4, 5 and target achievement cost of the predicted robot behavior of the robot 2 in fig. 9.

The tree of behaviors for addressing a target starts with estimating that actually achieving the target will result in the human 2 being in a happy human state. For achieving the target, the robot system predicts the tree of behaviors according to figs. 8, 9 and 10 including the behavior options for finally arriving at the target.

The target of the robot 2 may include a long-term target, e.g., improving a health of the human 4, 5. Alternatively or additionally, the target of the robot 2 may include a short-term target, e.g., supporting the human 4, 5 working in a household environment. In case the robot 2 pursues a long-term target, a resulting emotion of the human in the short-term may include an unhappy state. In such case, the robot system plans a behavior of the robot 2 that takes into account both achieving a short-term happiness of the human 4, 5 and achieving the long-term target.

In particular, the robot system estimates that executing the predicted robot behavior 1a will result in a 10 % achievement of the target. Concerning the alternative behavior 1b, the robot system estimates the corresponding target achievement cost that executing the predicted robot behavior 1b will result in the target being achieved for almost 60%.

In fig. 9, the predicted human behaviors of the human 4, 5 in reaction to the robot behavior of the robot 2 in a predicted interaction are annotated with the respective emotional state of the human 4, 5 and a probability value for the human 4, 5 will execute the respective human behavior in response to the robot behavior.

In particular, the human 4, 5 will execute the human behavior 1a with a probability of 90% (0.9), and the human 4, 5 will be in the happy state in reaction to the robot behavior 1a. Alternatively, in reaction to the robot 2 executing the robot behavior 1a, the human 4, 5 will execute the human behavior 1b with a probability of 10% (0.1), and the human 4, 5 is predicted to be in the excited state.

According to the tree of behaviors of fig. 9, the robot system predicts the robot 2 may execute the robot behavior 2 in response to the human behavior 1a being executed by the human 4, 5. Executing the robot behavior 2 is estimated to achieve the target to 30 %. In this manner, the tree of behaviors is annotated with the respective cost estimates for the robot 2 and the respective probabilities for a human behavior in response to the robot behavior, and the respective emotional state that the executed robot behavior will effect in the human 4, 5.

Fig. 10 illustrates the process of the emotion aware planning of a behavior using a tree structure of predicted behaviors with the assigned cost in a computer-implemented method according to an embodiment. Fig. 10 elaborates the tree of behaviors of figs 8 and 9 further by displaying sequences of human-robot interaction with the respective total cost of the depicted sequence of behaviors in the tree of behaviors.

A first sequence 21 of behaviors includes (runs along) the robot behavior 1a, the human behavior 1a, the robot behavior 2 and then along the left branch after the robot behavior 2. The first sequence of behaviors 21 has a total cost value of 0.1 calculated by the robot system.

A second sequence 22 of behaviors includes (runs along) the robot behavior 1a, the human behavior 1a, the robot behavior 2 and then along the right branch after the robot behavior. The second sequence of behaviors 22 has a total cost value of 10 calculated by the robot system.

A third sequence 23 of behaviors includes (runs along) the robot behavior 1a, the human behavior 1b, and then along the right branch after the robot behavior 2. The second sequence of behaviors 22 has a total cost value of 5 calculated by the robot system.

A fourth sequence 24 of behaviors includes (runs along) the robot behavior 1b, and then along the right branch after the robot behavior 1b. The second sequence of behaviors 22 has a total cost value of 60 calculated by the robot system.

In consequence, the robot system selects the first sequence 21 of behaviors for execution by the robot 2 based on the lowest cost value in the specific example of figs. 8, 9, 10.

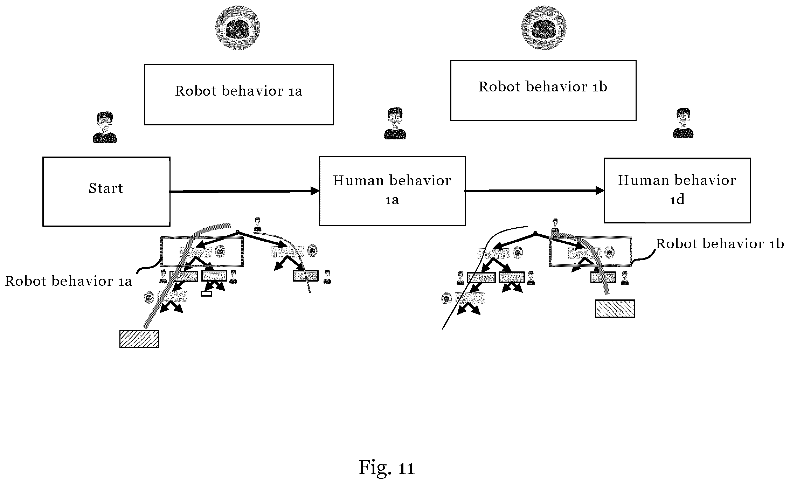

Fig. 11 illustrates the further aspects of the process of planning the emotion aware planning of a behavior using a tree structure of predicted behaviors with assigned cost in a computer-implemented method according to an embodiment.

In the example of fig. 11, the robot system controls the robot 2 to execute the robot behavior 1a of a sequence of behaviors as illustrated by the sequence of behaviors in the lower left part of fig. 11, which then shows the human 4, 5 to respond to the robot 2 with the human behavior 1a in response to the robot behavior 1a of the robot 2 in the interaction between the robot 2 and the human 4, 5.

After or during observing the human behavior 1a of the human 4, 5, the robot system of fig. 11 will run the processing cycle of observing-predicting-selecting, in particular steps S2 to S3 of fig. 1, again. The robot system selects the next best behavior resulting from the predicted behavior options for the robot 2, which in the example of fig. 11 is the robot behavior 1b as illustrated by the sequence of behaviors in the lower right part of fig. 11. The robotic system selects the robot behavior 1b and controls the robot 2 to execute the behavior 1b. In response to the executed robot behavior 1b, the human 4, 5 performs the human behavior 1d in fig. 11.

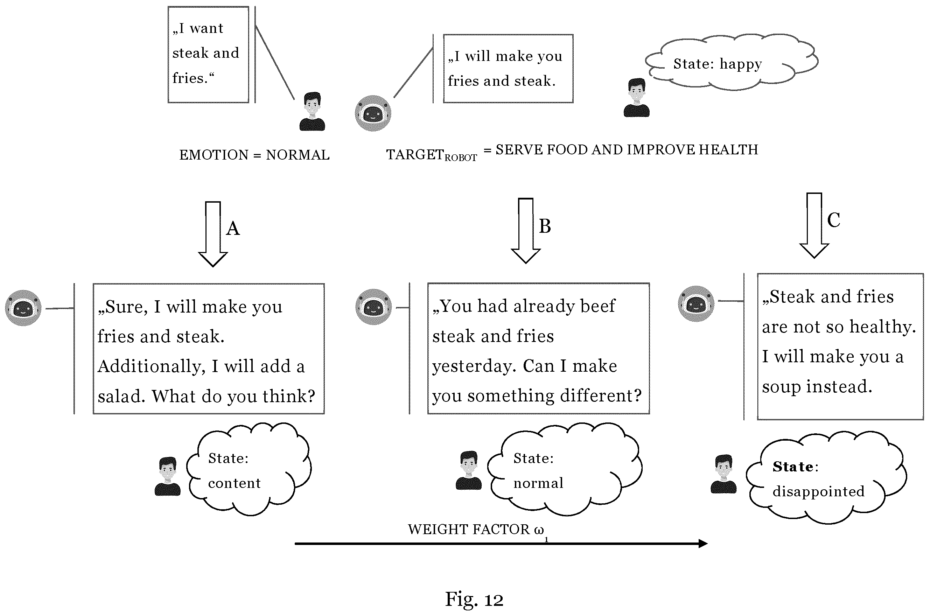

Fig. 12 illustrates an application scenario of emotion aware planning of a behavior using a tree structure of predicted behaviors with assigned cost in the computer-implemented method according to an embodiment.

The cost of a robot behavior may be computed based on a cost function according to equation (3)

$$\text{cost} = \text{target cost}_{\text{robot}} + \omega_1 * \text{emotional state}_{\text{human agent 1}}; \qquad (3)$$

with a weight factor $\omega_1$ for weighting the emotional state of the human agent. The weight factor $\omega_1$ can be set between 0 and 1. Using the cost function according equation (3) has the effect of the robot 2 nudging the human agent 4, 5 with which the robot 2 is cooperating in the environment towards a behavior that achieves a target, which benefits the human agent. The application scenario of fig. 12 display an example, which illustrates this effect.

The scenario of fig. 12 includes the robot 2 and the human agent in a kitchen environment engaged in a conversation about the planned target of cooking a meal.

At the current time, the emotional state of the human agent is considered a normal emotional state ("NORMAL").

The target of the robot 2 is to serve food and to improve the health of the human agent 4, 5, for which the food is cooked and served (target$_{\text{robot}}$ = "SERVE FOOD AND IMPROVE HEALTH"). The human agent 4, 5 outputs the statement "I want steak and fries". The planning process for a robot behavior in response to the human behavior requesting cooked food, in particular "a steak with fries", may predict a potential robot behavior including a speech output of "I will make you fries and steak" and may result with a high probability in the human agent transitioning into a happy state as a reaction to the behavior of the robot 2.

Nevertheless, the planning process of steps S9, S10, and S11 may use a cost function based on equation (3) with a suitable weight factor $\omega_1$ for weighting the emotional state of the human agent 4, 5 for further options of a robot behavior in the tree of robot behaviors. The lower part of fig. 12 illustrates three further sequences of actions, each including a next robot behavior option A, B, and C with a respective weight factor $\omega_1$ for weighting the predicted emotional state of the human agent in response to the respective robot behavior option A, B, and C.

There may exist situations were nudging towards a specific human behavior occurs automatically for the robotic system without considering the emotion of the human agent 4, 5 with a weight factor $\omega_1$ less, e.g., when the human agent 4, 5 has an open and happy emotional state at the start of the planning cycle and the target for the planning cycle is formulated so that it benefits the human agent 4, 5 but the human agent 4, 5 does actually not like the target that much.

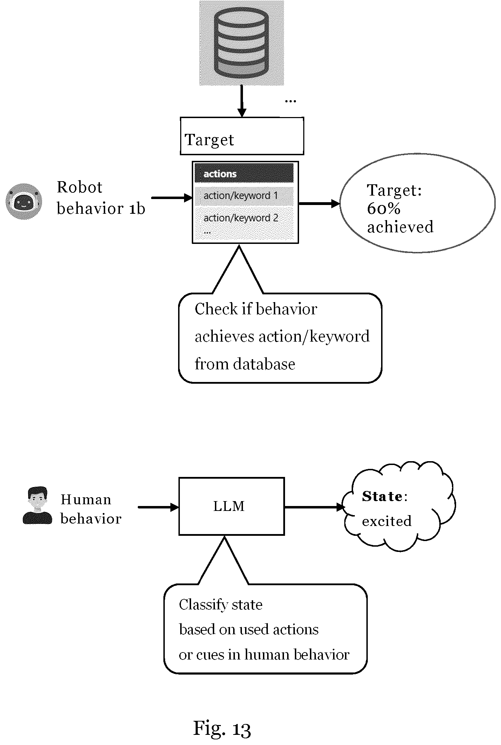

Fig. 13 illustrates in detail processes for estimating and assigning cost to predicted behaviors in the computer-implemented method according to an embodiment.

The upper part of fig. 13 illustrates examples for estimating the target achievement cost of the robot behavior in the computer-implemented method according to an embodiment.

Estimating the target achievement cost of the robot behavior may include determining whether the executed behavior may achieve an action or complies with one or plural keywords obtained from a database.

Estimating the target achievement cost may include checking actions of the robot 2 that should be included in the robot behavior in order to achieve the target by referring to a database.

For example, estimating the target achievement cost for a robot behavior that includes moving an object from a first location A to a second location B in the environment, may include, e.g., "object not anymore in location A", "no damage to the environment due to moving the object", "object in location B".

For example, estimating target achievement cost for explaining a topic to the human agent 4, 5 may use, e.g., for the topic: "how the sun works", the keywords "nuclear fusion", "helium atoms", "energy".

For example, estimating target achievement cost for conveying bad news to the human agent 4, 5 that a friend of the human agent 4, 5 has passed away, the target achievement cost may be acquired from the database using, e.g., the expression and terms "friend passed away", "name of friend", "date of passing away", etc..

Alternatively, for estimating the target achievement cost for a robot behavior, the method may prompt a large language model with to what extent the robot behavior already achieves an intended target.

The lower part of fig. 13 illustrates an example for estimating the human state based on the human behavior in the computer-implemented method according to an embodiment.

Estimating the human state can be performed by classifying the human state based on observed actions or cues in the observed human behavior.

Classifying the emotional state may include using a machine learning approach for sentiment analysis based on human behavior or prompting a large language model to assess the human behavior.

In a specific example, observing a nodding of the head of the human agent 4, 5 based on the obtained information on the environment or detecting a gesture such as including a "thumbs up" may be interpreted as the human agent being in a happy human state.

In a further example, perceiving an oral statement output by the human agent 4, 5 such as "I agree but I do not like how you said this to me" may indicate the human agent 4, 5 being in an angry human state.

An alternative or additional process may include sensing emotional human states based on observed human features of human agents 4, 5 in real human-robot conversations. The human features may include, e.g., parameters such as an intonation of human speech in acoustic data, facial expressions in visual data, measured stress levels determined based on heart rate measurements, e.g., or a combination of these or similar features.

Estimating the emotional state of the human agent 4, 5 may base on parameters and data acquired by sensors, such as imaging sensors, cameras, or electroencephalogram (EEG)-determining devices.

The estimated cost in the discussed example base on target achievement cost and emotional state that the method evaluates for selecting a sequence of behaviors based thereon. Alternatively or additionally, further cost functions may be used for assigning costs to robot behaviors in step S10 and for selecting the sequence of behaviors based thereon.

For example, the cost may include cooperation cost for a plurality of human agents 4, 5.

In a first example for cooperation cost, the cooperation costs are estimated based on equation (4)

$$\text{cost} = \text{target cost}_{\text{robot}} + \text{emotional state}_{\text{human agent 1}} + \text{emotional state}_{\text{human agent2}} + ... + \text{emotional state}_{\text{human agent n}}; \tag{4}$$

with estimated emotional states for n human agents with an integer value n. An application example, which favors estimating and assigning cost based on equation (4) may include addressing the target of teaching a group of n human agents 4, 5 dancing with the robot 2 showing the dance motion as a robot behavior.

In a second example for cooperation cost, the cooperation costs are estimated based on equation (5)

$$\text{cost} = \text{target cost}_{\text{robot}} + \text{target cost}_{\text{human agent 1}} ... + \text{target cost}_{\text{human agent i}} + \text{emotional state}_{\text{human agent 1}} + ... + \text{emotional state}_{\text{human agent n}}; \tag{5}$$

with estimated target cost for i human agents 4, 5 with an integer value i, estimated emotional states for n human agents 4, 5 with an integer value n. The integer value i is smaller than or the integer value n. An application example, which favors estimating and assigning cost based on equation (5) may include addressing the target of teambuilding within a first team including the robot 2 and the human agents 4, 5 with the numerals 1 to i in relation to a second team including the further human agents 4, 5 with the numerals i+1 to n. The robot 2 optimizes for its own target, the targets of all human agents 4, 5 with the numerals 1 to i in its group, and the emotional state of the human agents 4, 5 from all groups.

In a third example for cooperation cost, the cooperation cost is estimated based on equation (6)

$$\text{cost} = \omega_0 * \text{target cost}_{\text{robot}} + \text{emotional state}_{\text{human agent 1}} + ... + \text{emotional state}_{\text{human agent n}}; \tag{6}$$

with estimated emotional states for n human agents 4, 5 with an integer value n. An application example, which favors estimating and assigning cost based on equation (6) may include addressing the target of comforting another person, here the first human agent 4, 5. The information target cost of the robot 2 is considered with a reduced weight $\omega_0$.

Thus, an application scenario that includes, e.g., comforting a plurality of humans 4, 5 is also included in equation (6) for determining the cost.

Finally, cost weights $\omega_1, \omega_2, ..., \omega_n$ can also be assigned for each human agent 4, 5 in the cost function according to the following equation (7)

$$\text{cost} = \text{target cost}_{\text{robot}} + \omega_1 * \text{emotional state}_{\text{human agent 1}} + \omega_2 * \text{emotional state}_{\text{human agent 2}} + ... + \omega_n * \text{emotional state}_{\text{human agent n}}; \qquad (7)$$

These cost weights $\omega_1, \omega_2, ..., \omega_n$ may depend on a relationship and a group membership of each relevant human agent 4, 5 included in the scenario in the environment under consideration.

The robot system controls operation of the robot 2. The robot system may include the robot 2. All structural elements of the robot system 1 may be integrated with the robot 2. Alternatively, at least some elements of the robot system may be arranged externally to the robot 2, e.g., a sensor or a plurality of sensors, a processor or a plurality of processors constituting the processing means, and a memory or a plurality of memories of the robot system may be arranged externally to the robot 2.

The processing means may include one or a plurality of central processing units (CPU), graphic processing units (GPU), and application specific circuits (ASICS). The memory may include a combination of memories for storing data, including, e.g., random access memory (RAM) and video random access memory (VRAM).

All features described above or features shown in the figures can be combined with each other in any advantageous manner within the scope of the disclosure. In the detailed discussion of embodiments, numerous specific details were presented for providing a thorough understanding of the invention defined in the claims. It is evident that putting the claimed invention into practice is possible without including all the specific details.

In the specification and the claims, the expression "at least one of A and B" may replace the expression "A and/or B" and vice versa due to being used with the same meaning. The expression "A and/or B" means "A, or B, or A and B".

**Claims**

1. Robot system for executing at least one behavior in an interaction with at least one human agent (4, 5) in an environment, wherein the robot system comprises

   a robot (2) configured to execute the at least one behavior;
   at least one sensor configured to obtain information on the environment;
   a processing means configured to detect the at least one human agent (4, 5) based on the obtained information;
   an interface for accessing a common-sense inference engine in the form of a large language model; and the processing means is configured to
   predict a tree of behaviors of a human-robot interaction for performing the task by prompting the large language model a plurality of times;
   assign cost to each behavior of the robot (2) in the predicted tree of behaviors, wherein the assigned costs include behavior cost for the robot (2) and target achievement satisfaction cost of the at least one human agent (4, 5) in reaction to the behavior of the robot (2);
   select a sequence of behaviors (21, 22, 23, 24) from the predicted tree of behaviors based on the assigned cost; and
   control at least one actuator of the robot (2) based on the selected sequence of behaviors (21, 22, 23, 24).

2. Robot system according to claim 1, wherein
   the processing means is configured to predict the tree of behaviors by prompting the large language model iteratively for predicting how an interaction between the human agent (4, 5) and the robot (2) will evolve in the future.

3. Robot system according to claim 1 or 2, wherein
   the processing means is configured to prompt the large language model in separate threads, a first thread for the robot (2) and a second thread for the human agent (4, 5), or to prompt several large language models including a first large language model for the robot (2) and a second large language model for the human agent (4, 5).

4. Robot system according to one of claims claim 1 to 3, wherein
   the processing means is configured to provide plural prompts to the large language model for predicting one behavior of the tree of behaviors.

**5.** Robot system according to one of claims claim 1 to 4, wherein
the processing means is configured to set a first temperature for the large language model for prompting for predicting different topic results, and set a second temperature of the large language model for refining prediction results included in one of the predicted different topic results, wherein the second temperature is smaller than the first temperature.

**6.** Robot system according to one of claims claim 1 to 5, wherein
the processing means is configured to compute the behavior cost for the robot behavior including at least one of cost for moving an object, cost for teaching the human agent (4, 5) about a topic, cost for requesting an object or statement from the human agent (4, 5).

**7.** Robot system according to one of claims claim 1 to 6, wherein
the processing means is configured to compute the target achievement satisfaction cost of the human agent (4, 5) for the robot by evaluation of the human behavior including the human emotional state, wherein the human emotional state includes a happy state, an excited state, a sad state, and a bored state.

**8.** Robot system according to one of claims claim 1 to 7, wherein
the assigned cost of the robot behavior are a sum of the behavior cost and the human target achievement satisfaction cost, wherein the costs for each human behavior in response to the robot behavior are weighted based on a likelihood for the human behavior occurring.

**9.** Robot system according to one of claims claim 1 to 8, wherein
the processing means is configured to select the sequence of behaviors (21, 22, 23 24) of the robot (2) that has a smallest total weighted sum of cost for the behaviors of the robot (2) of the sequence of behaviors (21, 22, 23 24).

**10.** Robot system according to claim 9, wherein
the processing means is configured to compute the total weighted sum of cost for behaviors of the robot (2), wherein a first weight factor of the cost for individual behaviors of the sequence of behaviors (21, 22, 23 24) decreases with an increasing time of the individual behavior towards a prediction horizon into the future.

**11.** Robot system according to one of claims claim 1 to 10, wherein

the processing means is configured to determine candidate sequences (21, 22, 23) for the sequence of behaviors (21, 22, 23 24) of the robot (2) in the predicted tree of behaviors by applying a search-based planner, in particular an A*search or a Monte Carlo tree search for determining a next individual behavior of the robot (2), and to select a sequence of behaviors (21, 22, 23 24) from the determined candidate sequences (21, 22, 23 24) based on the assigned cost.

**12.** Robot system according to one of claims claim 1 to 11, wherein
the processing means is configured to, in a behavior-execution phase based on the selected behavior sequence, execute a next individual behavior, observe a human behavior of the at least one human agent (4, 5) in reaction to the next executed behavior, and enter a planning phase including steps of predicting the tree of behaviors, assigning cost, and selecting a new sequence of behaviors (21, 22, 23 24), and control the at least one actuator of the robot (2) based on the selected new sequence of behaviors (21, 22, 23 24).

**13.** Robot system according to one of claims claim 1 to 12, wherein
cost of an individual behavior includes the behavior cost of the robot (2) and target achievement satisfaction cost of the reaction of the at least one human agent (4, 5) weighted with a second weight factor, wherein the second weight factor is smaller than one.

**14.** Robot system according to one of claims claim 1 to 13, wherein
the processing means is configured to determine the target achievement satisfaction cost based on a human state estimation by classifying an emotional state based on human behavior using machine learning or a large language model.

**15.** Robot system according to one of claims claim 1 to 14, wherein

the processing means is configured to determine the behavior cost to include cost to target achievement for at least one of the robot and the human, in particular
including at least one of cost for an accorded target achievement by the robot and the human, cost for individual target achievement each by the robot and by the human, cost for a joint target achievement by the robot and the human, cost for a compatibility of individual targets of the robot and the human, cost for a compatibility of individual intentions of the robot and the human.

16. Robot system according to one of claims claim 1 to 15, wherein
the robot system includes the processing means further configured to execute the processing of one of claims 1 to 6.

17. Computer-implemented method for controlling a robot (2) for executing at least one behavior in an interaction with at least one human agent (4, 5) in an environment, wherein the robot system comprises

obtaining information on the environment from at least one sensor;
detecting the at least one human agent (4, 5) based on the obtained information;
accessing a common-sense inference engine in the form of a large language model
predicting (S9) a tree of behaviors of a human-robot interaction for performing the task by prompting the large language model a plurality of times;
assigning cost (S10) to each behavior of the robot (2) in the predicted tree of behaviors, wherein the assigned cost include behavior cost for the robot (2) and target achievement satisfaction cost of the at least one human agent (4, 5) in reaction to the behavior of the robot (2);
selecting (S11) a sequence of behaviors (21, 22, 23, 24) from the predicted tree of behaviors based on the assigned cost; and
controlling at least one actuator of the robot (2) based on the selected sequence of behaviors (21, 22, 23, 24).

Fig. 1

START

HUMANS
PRESENT? — S1

NO

YES

ANALYZING
SITUATION — S2

RUNNING
SIMULATIONS — S3

SELECTING
BEHAVIOR — S4

CONTROLLING ROBOT BASED
ON SELECTED BEHAVIOR — S5

POSITIVE
FEEDBACK? — S6

YES

NO

ADAPTING HUMAN
PROFILE(S) — S7

STOP

Fig. 2

(S2: ANALYZING SITUATION)

Fig. 3

(S3: RUNNING SIMULATIONS)

```
        ┌─────────────────┐
        │     START       │
        └─────────────────┘
                 │
                 ▼
            ◇ PLANS LEFT? ◇ ─── S31
     NO ──┘        │
                 YES
                 ▼
        ┌─────────────────┐
        │ ENACTING PLANNED│ ─── S32
        │ BEHAVIOR OF PLAN│
        └─────────────────┘
                 │
                 ▼
        ┌─────────────────┐
        │   ASSESSING     │ ─── S33
        │  SATISFACTION   │
        └─────────────────┘
                 │
                 ▼       S34
        ┌─────────────────┐
        │STORING RESULTS OF│ ---> ( 1 )
        │   ASSESSMENT     │
        └─────────────────┘
                 │
                 ▼
        ┌─────────────────┐
        │     STOP        │
        └─────────────────┘
```

Fig. 4

(S33: ASSESSING SATISFACTION)

Fig. 5

Fig. 6

START

PREDICTING BEHAVIORS BY
PROMPTING A LARGE
LANGUAGE MODEL — S9

ASSIGNING COST TO ROBOT
BEHAVIORS OF THE
PREDICTED BEHAVIORS — S10

SELECTING SEQUENCE OF
BEHAVIORS FROM
PREDICTED BEHAVIORS — S11

STOP

Fig. 7

Fig. 8

Fig.9

Fig. 10

Fig. 11

„I want steak and fries.“

EMOTION = NORMAL

„I will make you fries and steak.

TARGET$_{ROBOT}$ = SERVE FOOD AND IMPROVE HEALTH

State: happy

A

B

C

„Sure, I will make you fries and steak. Additionally, I will add a salad. What do you think?

„You had already beef steak and fries yesterday. Can I make you something different?

„Steak and fries are not so healthy. I will make you a soup instead.

State: content

State: normal

**State**: disappointed

WEIGHT FACTOR $\omega_1$

Fig. 12

EP 4 670 926 A1

**actions**

action/keyword 1

action/keyword 2

...

Target

Robot
behavior 1b

Target:
60%
achieved

Check if behavior
achieves action/keyword
from database

Human
behavior

LLM

**State**:
excited

Classify state
based on used actions
or cues in human behavior

Fig. 13

| | Europäisches Patentamt European Patent Office Office européen des brevets | **EUROPEAN SEARCH REPORT** | **Application Number** EP 25 19 6886 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Anonymous: "Behavior tree (artificial intelligence, robotics and control) - Wikipedia", Wikipedia, 2 October 2023 (2023-10-02), XP093337669, Retrieved from the Internet: URL:https://en.wikipedia.org/w/index.php?title=Behavior_tree_(artificial_intelligence,_robotics_and_control)&oldid=1178252094 * the whole document * ----- | | INV. B25J9/16 B25J11/00 |
| A | Ahn Michael ET AL: "Do As I Can, Not As I Say: Grounding Language in Robotic Affordances", , 16 August 2022 (2022-08-16), XP093337819, Retrieved from the Internet: URL:https://arxiv.org/pdf/2204.01691 * page 1 - page 2 * ----- | 1-17 | |
| A | Huang Wenlong ET AL: "Language Models as Zero-Shot Planners: Extracting Actionable Knowledge for Embodied Agents", , 8 March 2022 (2022-03-08), XP093337826, Retrieved from the Internet: URL:https://arxiv.org/pdf/2201.07207 * pages 3,10 * ----- | 1-17 | **TECHNICAL FIELDS SEARCHED (IPC)** B25J |
| T | Yao Shunyu ET AL: "Tree of Thoughts: Deliberate Problem Solving with Large Language Models", , 17 May 2023 (2023-05-17), XP093338153, Retrieved from the Internet: URL:https://arxiv.org/pdf/2305.10601v1 * the whole document * ----- -/-- | | |

| The present search report has been drawn up for all claims | | |
|---|---|---|
| Place of search The Hague | Date of completion of the search 19 November 2025 | Examiner Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 19 6886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Long Jieyi: "Large Language Model Guided Tree-of-Thought", arXiv.org, 15 May 2023 (2023-05-15), XP093338157, Retrieved from the Internet: URL:https://arxiv.org/pdf/2305.08291 * the whole document * | | |
| | ----- | | |
| T | BESTA MACIEJ ET AL: "Graph of Thoughts: Solving Elaborate Problems with Large Language Models", PROCEEDINGS OF THE AAAI CONFERENCE ON ARTIFICIAL INTELLIGENCE, vol. 38, no. 16, 21 August 2023 (2023-08-21), pages 17682-17690, XP093338159, ISSN: 2159-5399, DOI: 10.1609/aaai.v38i16.29720 * the whole document * | | |
| | ----- | | |

TECHNICAL FIELDS
SEARCHED        (IPC)

The present search report has been drawn up for all claims

| Place of search | Date of completion of the search | Examiner |
|---|---|---|
| The Hague | 19 November 2025 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

**REFERENCES CITED IN THE DESCRIPTION**

**Patent documents cited in the description**

- US 10158593 B2

- US 10666594 B2